## Europäisches Patentamt
## European Patent Office
## Office européen des brevets

(19)

(11) Numéro de publication: **0 167 466**
**A1**

(12)

# DEMANDE DE BREVET EUROPEEN

(21) Numéro de dépôt: **85440031.4**

(22) Date de dépôt: **24.05.85**

(51) Int. Cl.⁴: **F 16 J 15/14**
**B 01 J 3/03, B 01 J 19/00**

(30) Priorité: **04.06.84 FR 8408822**

(43) Date de publication de la demande:
**08.01.86 Bulletin 86/2**

(84) Etats contractants désignés:
**BE CH DE GB IT LI NL**

(71) Demandeur: **DE DIETRICH & Cie, Société Anonyme dite**

**F-67110 Niederbronn-Les-Bains(FR)**

(72) Inventeur: **Wagner, Raymond**
**2 rue du Schoeneck**
**F-67800 Hoenheim(FR)**

(74) Mandataire: **Bossard, Jacques-René**
**CABINET ARBOUSSE BASTIDE 20 rue de Copenhague**
**F-67000 Strasbourg(FR)**

(54) **Procéde pour la realisation de joints pour appareils chimiques.**

(57) Dans une enveloppe torique (1) en polytétrafluoroéthylène on dépose une résine (6) polymérisable sur place dans
le but de rendre ces joints réutilisables, ladite résine (6) est
un élastomère synthétique conservant une certaine élasticité
dans un large intervalle de températures, sans présenter de
déformation rémanente à la compression.

FIG. 3

0167466

- 1 -

PROCEDE POUR LA REALISATION DE JOINTS POUR APPAREILS
CHIMIQUES.

La présente invention concerne l'obtention
d'un joint étanche continu entre le couvercle ou élément
analogue d'un appareil chimique tel que réacteur, colonne,
citerne, ou analogues, généralement émaillés, et le corps
de cet appareil.

On sait que, compte-tenu des conditions sévères, et notamment des températures élevées qui règnent
dans les appareils chimiques, le maintien de l'étanchéité entre les éléments dont ils sont constitués est difficile à garantir.

Différents moyens ont été proposés, pour compenser les déformations relatives entre les éléments
d'un appareil émaillé. Un premier moyen a consisté dans
l'emploi de cales en matière synthétique telle que de la
"KLINGERITE" en forme de segments arrondis à section
transversale en V, c'est-à-dire jouant le rôle de coins
annulaires, mis en place tout autour de la zone de raccordement. Outre la difficulté de cette mise en place, ces
segments présentent l'inconvénient de n'être utilisables
qu'une seule fois, ce qui impose d'en constituer un stock
considérable.

Un autre moyen plus pratique a consisté à injecter dans l'espace ouvert vers l'extérieur d'un joint à
section en U inséré entre le couvercle et le réacteur une

- 2 -

composition de résine synthétique pâteuse, par exemple du genre epoxy, se durcissant sur place, soit sous l'action d'un catalyseur et d'un accélérateur, soit sous l'action de la chaleur. La mise en oeuvre de ce moyen est plus simple et plus efficace que la précédente, et fait appel à des garnitures annulaires en amiante assurant une certaine souplesse au serrage, mais, du fait de son manque d'élasticité, il subsiste l'inconvénient que d'une part ce joint ne peut être utilisé que dans la position dans laquelle il a été fabriqué, et d'autre part il ne peut plus être réutilisé en cas de changement de l'un des éléments entre lesquels il assure l'étanchéité notamment en cas de changement de couvercle. Ce procédé demeure donc peu économique.

La présente invention concerne un procédé permettant d'éliminer ce dernier inconvénient et qui permet de créer entre deux éléments d'un appareil émaillé un joint d'étanchéité efficace et qui demeure réutilisable même après plusieurs démontages de l'appareil, et même en cas de changement d'un élément.

Selon l'invention ce joint est obtenu par un procédé partiellement comparable au précédent, mais dans lequel le matériau injecté est un élastomère qui demeure relativement souple et élastique, de manière à se conformer constamment et de manière répétée à toutes les irrégularités de forme ou d'adaptation d'un élément sur le corps d'un appareil.

Cet élastomère sera injecté dans un volume torique fermé vers l'intérieur et constitué par un joint à section en "U" ou en "V" en matériau tel que le TEFLON, résistant aux attaques chimiques, et son fluage vers l'extérieur au moment de sa compression entre les éléments sera évité par une couronne métallique comportant des nervures concentriques, placée dans le plan médian de ce joint, ces deux particularités étant par ailleurs déjà appliquées dans la technique précédente.

Comme élastomère on utilise de préférence un matériau tel que celui commercialisé sous la marque "RHODORSEAL 566i", qui, tout en se présentant sous forme d'une pâte facile à travailler, présente après réticulation une résistance remarqua-

- 3 -

ble aux variations de température (entre -70 et + 300°), une excellente résistance chimique et une faible déformation rémanente à la compression. La réticulation de ce composé intervient en trois heures environ, étant entendu qu'avec un accélérateur, on dispose d'environ 30 minutes pour injecter le produit.

Ce procédé peut être mis en oeuvre de diverses manières, selon la nature et les dimensions du joint à créer.

Pour faciliter la compréhension de l'invention, on a illustré au dessin annexé :

- figures 1 et 2 : des joints conformes à la technique antérieure connue, mentionnée ci-dessus ;

- figure 3 : un joint selon l'invention, du type injecté sur place, et

- figure 4 : un joint selon l'invention, du type préparé à l'avance ;

- figure 5 : une variante de constitution et de mise en place du joint selon l'invention.

Sur ce dessin, la référence 1 désigne l'enveloppe en polytétrafuoroethylène (TEFLON), commune à tous les joints, et la référence 2 désigne la couronne métallique ondulée, également commune.

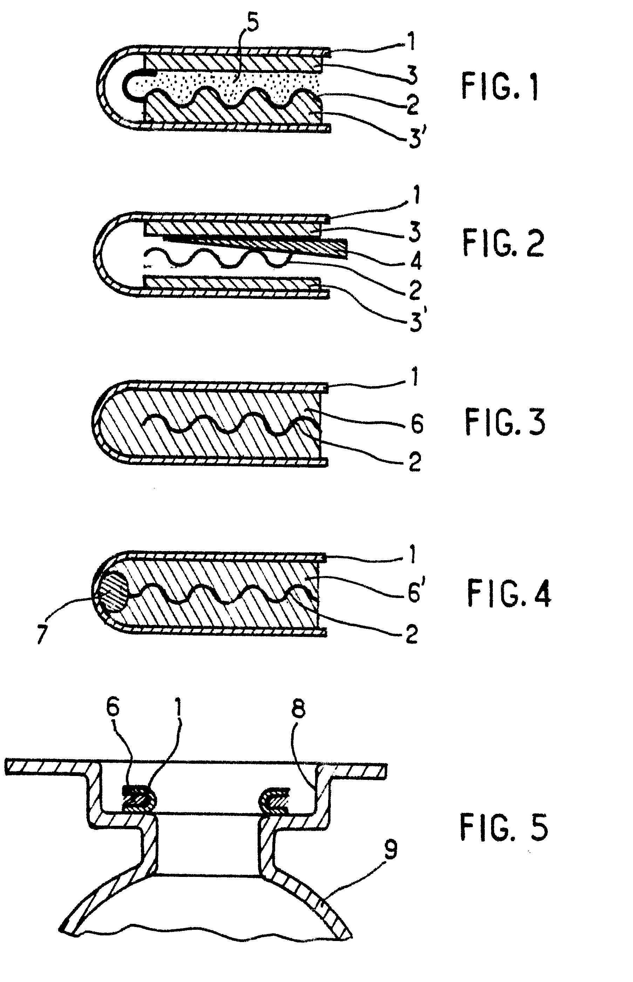

Dans les joints connus, l'étanchéité était obtenue au moyen de garnitures souples 3-3', soit en matériau souple chargé d'amiante (figure 2), ou non chargé d'amiante (figure 1), les irrégularités étant rattrapées soit avec une cale 4, formant coin, en forme de segment circulaire, mise en place à force dans le joint, soit par injection d'une résine époxy 5, durcie sur place après fermeture du réacteur, les deux moyens présentant les inconvénients rappelés plus haut, liés à l'absence d'élasticité des joints ainsi formés.

Le procédé selon l'invention élimine ces inconvénients grâce à l'utilisation, conjointement à la couronne 2, d'un élastomère conservant son élasticité même après réticulation, et dans un intervalle très large de températures.

Dans la première réalisation illustrée par la fi-

- 4 -

gure 3, l'élastomère 6 est injecté après mise en place du joint, et réticule sur place.

Dans la seconde réalisation illustrée par la figure 4, l'élastomère est déposé successivement sur chacune des faces de la couronne 2, et, après réticulation, l'ensemble constitué par le tore de matériau élastomère armé par la couronne est introduit dans l'enveloppe 1. On prévoit un bourrelet 7 dans le fond de ladite enveloppe pour éviter qu'elle ne soit endommagée par le bord interne de la couronne.

Enfin on a illustré à la figure 5 une troisième réalisation de l'invention dans laquelle la couronne métallique 2 est omise, le joint se composant simplement de l'enveloppe 1 et de l'élastomère 6. Cette variante convient pour les joints de petit diamètre et sous des pressions relativement peu élevées. L'élastomère est soit injecté dans l'enveloppe, soit préparé à l'avance sous forme de boudin plastique. Cette variante présente un très grand intérêt dans le cas des joints non apparents, donc non accessibles, puisque placés dans le col 8 d'un réacteur 9, et qu'il était donc impossible de caler avec les procédés classiques rappelés ci-dessus.

Ces trois réalisations de l'invention ne sont pas limitatives.

Ainsi, en particulier, comme variante de la réalisation de la figure 4, on peut préfabriquer séparément deux anneaux en matériaux élastomères et les disposer de chaque côté de la couronne 2. Dans un tel cas, le bourrelet 7 peut également être préfabriqué séparément, puis introduit dans le fond de l'enveloppe 1 avant la couronne 2 et les deux anneaux d'élastomère, ou bien il peut être coulé sur place avant introduction de la couronne et des deux anneaux.

Les exemples ci-après illustrent ces diverses variantes de l'invention.

Exemple 1.

On peut remplacer par du RHODORSEAL 5664 les inserts de calage d'un joint connu décrit ci-dessus, comportant une rondelle en acier ondulé et deux garnitures en amiante logées dans l'ouverture d'un tore en TEFLON à section en "V" ou en "U" ouvert vers l'extérieur, et ayant par exemple un diamètre de 1000 mm.

Le tore en TEFLON étant en place sans serrage entre les deux éléments, avec la rondelle et les deux garnitures, on injecte l'élastomère non réticulé de part et d'autre de la rondelle, et au bout d'environ 3 heures, on effectue le serrage des crampons du couvercle, et on ébarbe le bourrelet de 5 mm qui a flué vers l'extérieur. Grâce à l'élasticité de la résine, l'étanchéité sous 10 bars subsiste après plusieurs serrages et desserrages successifs des crampons.

Exemple 2.

On répète l'exemple 1, mais en omettant les garnitures d'amiante. Dans ce cas on peut préparer le joint à l'avance, en déposant sur chaque face successivement de la rondelle d'acier ondulé isolée une couche d'environ 5 mm d'épaisseur de l'élastomère. Dès que la réticulation en permet la manipulation, c'est-à-dire au bout d'une heure environ, on place l'ensemble dans l'ouverture du "U", pour éviter que la rondelle d'acier n'endommage le fond de l'U, on y dépose préalablement un bourrelet de résine élastomère et on lui permet d'amorcer sa réticulation.

Le comportement de ce joint est semblable à celui de l'exemple 1, après chauffage jusqu'à 200°C, avec des diamètres de réacteurs de 250 à 1000 mm.

Exemple 3.

On répète les exemples précédents, mais en omettant cette fois à la fois les garnitures d'amiante et la rondelle d'acier ondulé, dans la mesure toutefois où le diamètre du joint ne dépasse pas 350 mm et la pression n'excède pas 10 bars. L'élastomère est alors directement coulé dans le tore de TEFLON, ou encore préparé à l'avance dans un moule. Une épaisseur de 5 mm est suffisante, ce qui est d'une grande utilité pour les joints non apparents, généralement logés dans une cuvette pratiquée dans la partie supérieure du réacteur, et qu'il est impossible de caler par les moyens classiques puisqu'inaccessibles de l'extérieur.

0167466

- 7 -

REVENDICATIONS.

1. Procédé pour la réalisation de joints pour appareils chimiques comportant, dans une enveloppe torique en polytétrafluoroéthylène une résine polymérisable sur place, caractérisé en ce que, dans le but de rendre ces joints réutilisables, ladite résine est un élastomère synthétique conservant une certaine élasticité dans un large intervalle de températures, sans présenter de déformation rémanente à la compression.

2. Procédé selon la revendication 1, caractérisé en ce que l'élastomère est injecté dans l'enveloppe déjà mise en place, et réticulé sur place.

3. Procédé selon la revendication 1, caractérisé en ce que, dans le plan de symétrie horizontale de l'enveloppe est disposée une rondelle en acier ondulé sur les deux faces de laquelle est préalablement déposé l'élastomère, le fond de l'enveloppe étant protégé préalablement par un bourrelet de résine.

4. Procédé selon l'une quelconque des revendications 1 à 3, caractérisé en ce qu'au surplus des garnitures annulaires en amiante sont noyées dans la résine.

5. Procédé selon la revendication 1, caractérisé en ce que des anneaux de résine élastomères sont préfabriquées à l'extérieur de l'enveloppe, puis introduits sous l'enveloppe de chaque côté d'une couronne d'acier ondulé.

6. Procédé selon la revendication 5, caractérisé en ce qu'un bourrelet de résine élastomère est préfabriqué à l'extérieur de l'enveloppe et introduit dans celle-ci avant les anneaux de résine élastomère et la couronne d'acier ondulé.

7. Procédé selon la revendication 5, caractérisé en ce qu'un bourrelet de résine élastomère est coulé dans le fond de l'enveloppe avant introduction des anneaux d'élastomère et de la rondelle d'acier.

8.          Procédé selon l'une quelconque des revendications 1 à 7, caractérisé en ce que la résine élastomère  est un élastomère silicone monocomposant vulcanisant spontanément à la température ordinaire.

- 1 -

0167466

FIG. 1

FIG. 2

FIG. 3

FIG. 4

FIG. 5

Office européen
des brevets

**RAPPORT DE RECHERCHE EUROPEENNE**

0167466
Numero de la demande

EP 85 44 0031

## DOCUMENTS CONSIDERES COMME PERTINENTS

| Catégorie | Citation du document avec indication, en cas de besoin des parties pertinentes | Revendication concernee | CLASSEMENT DE LA DEMANDE (Int. Cl 4) |
|---|---|---|---|
| Y | EP-A-0 079 448 (PFAUDLER-WERKE) <br> * Page 2, paragraphe 4 - page 3, paragraphe 1; page 5, paragraphe 1 - page 8, paragraphe 1; figures 1-5 * | 1 | F 16 J 15/14 <br> B 01 J 3/03 <br> B 01 J 19/00 |
| A |  | 2-5 | |
| | --- | | |
| Y | POWER, vol. 98, mars 1954, pages 105-124, New York, US; S. ELONKA: "Gaskets" <br> * Page 112, "Silicone rubber"; page 114, "Jacketed gaskets" * | 1 | |
| A | IDEM | 8 | |
| | --- | | DOMAINES TECHNIQUES RECHERCHES (Int. Cl.4) |
| A | US-A-3 230 290 (NESLON) <br> * Colonne 1, ligne 20 - colonne 5, ligne 29; figures 1-6 * | 1-4 | |
| | --- | | F 16 J <br> B 01 J |
| A | FR-A-1 491 302 (POLYCHEMIE) <br> * Page 1, colonne de gauche, paragraphes 1,2; page 1, colonne de droite, dernier paragraphe - page 2, colonne de gauche, paragraphe 1 * | 1,2,8 | |
| | ----- | | |

Le présent rapport de recherche a été établi pour toutes les revendications

| Lieu de la recherche | Date d'achèvement de la recherche | Examinateur |
|---|---|---|
| LA HAYE | 11-09-1985 | LEGER M.G.M. |